# EUROPÄISCHE PATENTSCHRIFT

(11) **EP 2 667 304 B1**
(45) Veröffentlichungstag und Bekanntmachung des Hinweises auf die Patenterteilung: **26.09.2018**
(21) Anmeldenummer: 13002608.1
(22) Anmeldetag: 17.05.2013
(51) Int. Cl.: G06F 11/30, G06F 11/07

(54) **Eingang-Ausgangsmodul**
Input/Output Modul
Module d'entrée/sortie

(30) Priorität: 24.05.2012 DE 102012010145
(43) Veröffentlichungstag der Anmeldung: 27.11.2013
(73) Patentinhaber: PHOENIX CONTACT GmbH & Co. KG, 32825 Blomberg (DE)
(72) Erfinder: Oster, Viktor, 32825 Blomberg (DE)
(74) Vertreter: Bill, Burkart Hartmut

(56) Entgegenhaltungen:
- US-B2- 7 330 768
- Acromag Inc.: "BusWorks TM 900PB Series ProfiBus/RS485 Network I/O Modules Technical Reference - 8500-698-A02M000 - INTRODUCTION TO PROFIBUS DP", , 31. Dezember 2002 (2002-12-31), Seiten 1-38, XP002741767, Gefunden im Internet: URL:https://www.acromag.com/sites/default/ files/Acromag_Intro_ProfibusDP_698A.pdf [gefunden am 2015-07-01]

## Beschreibung

Die Erfindung betrifft ein E/A-Modul zum Erfassen von an wenigstens einem Signal-Peripherieanschluss anliegenden Eingangs-Peripheriesignalen und/oder zum Ausgeben von Ausgangs-Peripheriesignalen an wenigstens einem Signal-Peripherieanschluss.

Insbesondere im Bereich der Sicherheitstechnik, d.h. zur Überwachung und/oder Steuerung sicherheitsrelevanter oder sicherheitskritischer Prozesse, ist seit Jahren am Markt der Trend zu beobachten, immer mehr Funktionen aufzunehmen.

Die Veröffentlichung von Amromag Inc. "BusWorks TM 900PB Series ProfiBus/RS485 Network I/O Modules Technical Reference - 8500-698-A02M000 - Introduction to ProfiBus DP", 31. Dezember 2002, Seiten 1 bis 38, https://www.acromg.com/sites/default/files/Acromag_Intro_Pr ofibusDP_698A.pdf vom 2015-07-01 beschreibt die Technoligie eines Feldbusses, insbesondere des ProfiBus DP (DP = Decentralized Periphery). Hierbei handelt es sich um einen Feldbus, der verteilte Eingabe-/Ausgabe-Geräte anbindet, die über eine schnelle serielle Datenverbindung mit einem zentralen Controller verbunden sind. Es wird ein Bus-Master verwendet, um Slaves zu koordinieren. Das Buskonzept sieht zwei verschiedene Kategorien von Master-Einheiten vor, nämlich Master der Klasse 1 und Master der Klasse 2. Hierbei werden Master der Klasse 2 zur Konfiguration von Slaves und für Diagnosezwecke verwendet

Unter einem sicherheitsrelevanten oder sicherheitskritischen Prozess wird nachfolgend ein Prozess verstanden, von dem bei Auftreten eines Fehlers eine nicht zu vernachlässigende Gefahr für Menschen und/oder auch materielle Güter ausgehen kann. Bei einem sicherheitsrelevanten oder sicherheitskritischen Prozess muss daher mit im Idealfall 100-prozentiger Sicherheit gewährleistet sein, dass bei Vorliegen eines Fehlers dieser Prozess, ein mit diesem Prozess gekoppelter Folgeprozess und/oder ein diesen Prozess umfassendes Gesamtsystem in einen sicheren Zustand überführt wird, von dem also keinerlei Gefahr mehr ausgehen kann. Derartige sicherheitsrelevante oder sicherheitskritische Prozesse können somit auch Teilprozesse von größeren, übergeordneten Gesamtprozessen sein. Beispiele für sicherheitsrelevante oder sicherheitskritische Prozesse sind chemische Verfahren, bei denen kritische Parameter unbedingt in einem vorgegebenen Bereich gehalten werden müssen, komplexe Maschinensteuerungen, wie etwa bei einer hydraulischen Presse oder einer Fertigungsstraße, bei welchen beispielsweise das Inbetriebnehmen eines Press-/Schneidwerkzeuges einen sicherheitsrelevanten Teilprozess darstellen kann. Weitere Beispiele für sicherheitsrelevante oder sicherheitskritische (Teil-) Prozesse sind die Überwachung von Schutzgittern, Schutztüren oder Lichtschranken, die Steuerung von Zweihandschaltern oder auch die Reaktion auf Notausschalter. Für alle sicherheitsrelevanten Prozesse ist es somit unbedingt erforderlich, dass die jeweils zugehörigen, für die Sicherheit relevanten Signale und Daten ohne irgendeine Verfälschung zeitnah transportiert werden, da jede Verfälschung eine fehlerhafte Funktion und/oder Reaktion zur Folge haben kann, die in letzter Konsequenz das Leben und die Gesundheit von Personen gefährden kann.

Um den Sicherheitsanforderungen gerecht zu werden, hat es in den letzten Jahren zahlreiche Vereinbarungen gegeben, die einen nahezu fehlerfreien Datentransport fordern. Diese betreffen insbesondere den Signal-/Datentransport selbst sowie eine zulässige Restfehlerwahrscheinlichkeit in Abhängigkeit der jeweiligen Anwendung bzw. des jeweiligen Prozesses. Für die Einheiten, die für einen nahezu fehlerfreien Signal-/Datentransport Sorge tragen und/oder mit nahezu 100-prozentiger Sicherheit gewährleisten sollen, dass bei Vorliegen eines Fehlers ein sicherer Zustand eingenommen wird, wurden daher unterschiedliche interne Sicherheitsstrukturen entwickelt, so dass Bauteilausfälle, Systemunterbrechungen, das Ausbleiben oder Verfälschen von Signalen oder Daten beim Signal-/Datentransport erkannt werden. Derartige, interne Sicherheitsstrukturen besitzende Einheiten werden nachfolgend als sicher bezeichnet.

Derartige sichere Einheiten können sich teilweise auch gegenseitig überprüfen, so dass auch die fehlerhafte Aktivität einer anderen Einheit festgestellt werden kann.

Signale und Daten werden nachfolgend als sicher bezeichnet, die für die Sicherheit relevante Signale oder Daten umfassen und deren Transport und/oder hierfür notwendige Verarbeitung auch unter Einbeziehung von sicheren Einheiten erfolgt. Folglich erfolgt deren Auswertung je nach angewandter Sicherheitsstruktur entsprechend sicherheitsgerichtet.

Die Komplexität der an einem sicherheitsrelevanten oder sicherheitskritischen Prozess beteiligten Geräte, einschließlich von Feld-Geräten, wie z.B. Sensoren oder Aktoren, und von Anbindungs-Geräten, die E/A-Module (Eingangs-/Ausgangs-Module) besitzen, welche die Anbindung zu diesen Feld-Geräten bereitstellen, nimmt ständig zu. So empfangen die E/A-Module mittels beherbergten Empfangseinheiten von angebundenen Feld-Eingangsgeräten, wie z.B. Sensoren, Eingangssignale, nachfolgend als Eingangs-Peripheriesignale bezeichnet, zur weiteren Verarbeitung und/oder geben mittels beherbergten Ausgabeeinheiten an angebundene Feld-Ausgangsgeräte, wie beispielsweise Aktoren, auf solchen Eingangs-Peripheriesignalen basierend anwendungsspezifisch verarbeitete Ausgangssignale, nachfolgend als Ausgangs-Peripheriesignale bezeichnet, aus. Die vom E/A-Modul beherbergten Empfangs- und/oder Ausgabeeinheiten werden nachfolgend als Peripherieeinheiten bezeichnet.

Zwischen dem Empfang von Eingangs-Peripheriesignalen und der Ausgabe von Ausgangs-Peripheriesignalen und also innerhalb einer hierfür vorgesehenen Signalverarbeitungskette erfolgt ferner häufig ein Transport von Daten, welche hierbei zu verarbeitende und/oder verarbeitete Signale repräsentierend beinhalten, und der bei sicherheitsrelevanten oder sicherheitskritischen Prozessen ebenso nahezu fehlerfrei sein muss.

Da, wie erwähnt, die Komplexität der an einem sicherheitsrelevanten oder sicherheitskritischen Prozess beteiligten Geräte ständig zunimmt, führt dies zwangsläufig auch zu einer Erhöhung der für den Transport und/oder die Verarbeitung von Signalen und Daten benötigten Transportkanäle bzw. Verarbeitungskanäle. Um die damit verbundenen Kosten zu reduzieren, besteht insbesondere in der Sicherheitstechnik der Bedarf, immer mehr solcher Kanäle innerhalb eines gemeinsamen, am Prozess beteiligten Gerätes umzusetzen, und eine gemeinsame Verarbeitungslogik innerhalb eines solchen Gerätes einzusetzen sowie diese auf die folglich erhöhte Anzahl der Kanäle aufzuteilen, so dass insgesamt die Kosten je benötigtem Kanal reduziert werden.

Da somit durch den sehr hochkanaligen Aufbau der Geräte auch die Anbindung von sicheren Peripherieeinheiten innerhalb eines E/A-Moduls immer komplexer wird und eine große Anzahl an internen Signalen/Daten innerhalb der E/A-Module der Anbindungs-Geräte benötigt, erhöht dies gleichzeitig die Komplexität von hierbei innerhalb der E/A-Module eingesetzten Leiterplatten, welche sich wiederum negativ auf die Herstellungskosten dieser E/A-Module auswirkt. Außerdem wird die Wahl eines Prozessors für die Umsetzung der Verarbeitungslogik eines E/A-Moduls stark eingeschränkt. Zwar ist gemäß DE 42 18 418 A1 bekannt, dass ein Mikrocontroller auch über ein Bussystem auf eine Peripherieeinheit, beispielsweise anwenderspezifisches IC, zugreifen kann, in welcher Peripherieeinheit z.B. ein sogenanntes Mikrokontroller-Interface vorgesehen ist, über das Steuer- und Kontrollfunktionen realisiert werden können.

Bei Anwendungen in der Sicherheitstechnik, d.h. bei Anwendungen, bei denen für die Sicherheit relevante Eingangssignale, also sichere Eingangssignale, verarbeitet und/oder für die Sicherheit relevante Ausgangssignale, also sichere Ausgangssignale, ausgegeben werden müssen, können niedrigpreisige Mikrocontroller oftmals nicht mehr verwendet werden, da diese nur wenige E/A-Pins zur Verfügung stellen, und somit die gegenwärtig in der Sicherheitstechnik vorliegenden Anforderungen an ein heutiges Gerätedesign nicht mehr erfüllen können. Auch ist die Verwendung von Standardschnittstellen, wie beispielsweise serielle SPI-Schnittstellen oder parallele Schnittstellen, oftmals fehlerbehaftet und für die Verwendung in der Sicherheitstechnik nur mit zusätzlichen Maßnahmen zur Absicherung der zu übertragenden, für die Sicherheit relevanten Signale und Daten geeignet. Jegliche zusätzlichen Maßnahmen sind aber nur dann möglich, wenn die Kommunikationspartner, d.h. im Wesentlichen wenigstens ein in dem E/A-Modul beherbergter Mikroprozessor und wenigstens eine ebenfalls in dem E/A-Modul beherbergte Peripherieeinheit, die dazu erforderliche Intelligenz aufweisen.

Eine Aufgabe der Erfindung ist es eine verbesserte Anbindung von Peripherieeinheiten und Mikroprozessoren innerhalb von E/A-Modulen zu schaffen, die für einen Einsatz in der Sicherheitstechnik geeignet ist und nur wenige Signale benötigt. Insbesondere sollten ferner Standardschnittstellen von Mikrocontrollern einsetzbar sein, um eine ausreichende Absicherung der Datenanbindung der Peripherieeinheiten an die Verarbeitungslogik bereitzustellen.

Die erfindungsgemäße Lösung der Aufgabe der Erfindung ist durch ein Gerät mit den Merkmalen des anhängigen Hauptanspruchs 1 gegeben. Zweckmäßige und/oder bevorzugte Weiterbildungen und Ausführungsformen sind Gegenstand der abhängigen Ansprüche.

Demgemäß schlägt die Lösung der Erfindung ein weiterentwickeltes E/A-Modul vor, welches zum Erfassen von an wenigstens einem Signal-Peripherieanschluss anliegenden Eingangs-Peripheriesignalen und/oder zum Ausgeben von Ausgangs-Peripheriesignalen an wenigstens einem Signal-Peripherieanschluss ausgebildet ist. Das erfindungsgemäße E-/A-Modul beherbergt ein Mikrocontrollersystem mit einer ersten Anzahl von Peripherieeinheiten mit jeweils wenigstens einem Signal-Peripherieanschluss, einer zweiten Anzahl von Mikroprozessoreinheiten sowie wenigstens einer Diagnoseeinheit. Jede der ersten Anzahl von Peripherieeinheiten sowie jede der zweiten Anzahl von Mikroprozessoreinheiten und die Diagnoseeinheit besitzen jeweils eine eineindeutige Kommunikationsidentifikation und jede der ersten Anzahl von Peripherieeinheiten, jede der zweiten Anzahl von Mikroprozessoreinheiten und die Diagnoseeinheit besitzen ein Mikrocontrollerinterface zum Kommunizieren über einen Mikroprozessorbus sowie zum Realisieren von Steuer- und/oder Kontrollfunktionen.

Ferner ist jede der ersten Anzahl von Peripherieeinheiten über wenigstens einen Mikroprozessorbus an wenigstens eine Mikroprozessoreinheit geschaltet, an welchen Mikroprozessorbus jeweils auch die Diagnoseeinheit angeschaltet ist, wobei jede dieser an einen gemeinsamen Mikroprozessorbus angeschalteten Einheiten ausgebildet ist, beim Senden über den Mikroprozessorbus von Daten, welche an dem wenigstens einem Signal-Peripherieanschluss anliegende Eingangs-Peripheriesignale und/oder an den wenigstens einen Signal-Peripherieanschluss auszugebende Ausgangs-Peripheriesignale repräsentierend beinhalten können, die jeweilige eigene eineindeutige Kommunikationsidentifikation als sicherheitsrelevantes Datum mit zu senden und beim Empfangen von über den Mikroprozessorbus gesendeten Daten die Kommunikationsidentifikation einer jeweiligen sendenden Einheit als sicherheitsrelevantes Datum zu erkennen und sicherheitsgerichtet auszuwerten.

Wesentliche Vorteile hierbei sind folglich, dass Standardschnittstellen auch zwischen der Kommunikation zwischen Mikroprozessor und Peripherieeinheiten innerhalb eines E/A-Moduls, z.B. in Art von SPI oder USB-Schnittstellen, einsetzbar sind, so dass nur wenige Signale auch für die Verarbeitung von sicherheitsrelevanten Eingangs-Peripheriesignalen von angebundenen Feldgeräten wie z.B. Druck oder Temperatur repräsentierende Signale von Sensoren, sowie für die Verarbeitung von sicherheitsrelevanten Ausgangs-Peripheriesignalen an angebundene Feldgeräte, wie z.B. an Aktoren und Stellglieder erforderlich sind, so dass auch die Verwendung von kostengünstigen Mikroprozessoren mit nur wenigen E/A-Pins kostengünstig eingesetzt werden können und somit bei verbesserter Verfügbarkeit der zu verwendeten Einheiten die Sicherheit der Geräteeinheiten innerhalb eines E/A-Moduls effektiv erhöht wird, da der auf diese Weise verbesserte interne Signal- oder Datenaustausch eine genauere Diagnose ermöglicht und z.B. auch genauere Entscheidungskriterien für den Übergang in einen sicheren Zustand im Fehlerfall gewährleistet. Wird von den Einheiten, insbesondere den Peripherieeinheiten lediglich die eigene Kommunikationsidentifikation gesendet können Daten auf einfache Weise unaufgefordert gesendet werden, und bei Bedarf innerhalb einer empfangenden Einheit, insbesondere innerhalb des empfangenden Mikroprozessors, ausgewertet werden können.

Um zur weiteren Erhöhung der Sicherheit ferner eine Querkommunikation verschiedener Funktionseinheiten innerhalb eines E/A-Moduls untereinander zu ermöglichen, ist in besonders bevorzugter Weiterbildung vorgesehen, dass jede der Peripherieeinheiten auch zur Querkommunikation untereinander an wenigstens einen gemeinsamen Mikroprozessorbus angeschaltet ist.

In weiterer bevorzugter, ergänzender oder alternativer Ausführung ist ferner vorgesehen, dass wenigstens zwei Mikroprozessoren in redundanter Ausführung beherbergt sind, wobei die Anschaltung der Peripherieeinheiten und vorzugsweise auch der Diagnoseeinheit an die Mikroprozessoren je nach spezifischer Ausführung über einen oder auch über zwei oder mehrere Mikroprozessorbusse erfolgen kann. Jede der ersten Anzahl von Peripherieeinheiten und die Diagnoseeinheit sind bevorzugt derart angeschaltet, dass an jede Mikroprozessoreinheit wenigstens zwei Mikroprozessorbusse angeschaltet sind.

In besonders bevorzugter Weiterbildung ist ferner vorgesehen, dass die redundant angeschalteten Mikroprozessoren ferner über eine zusätzliche Querkommunikationsverbindung miteinander verschaltet sind, so dass auch parallel und/oder ergänzend zu der Kommunikation über den Mikroprozessorbus ein Kommunikationsaustausch zwischen den redundanten Mikroprozessoren ermöglicht ist.
Da die Kommunikation über den wenigstens einen Mikroprozessorbus und die Querkommunikationsverbindung somit sowohl lesende und schreibende Zugriffe sowie ferner ein gegenseitiger Datenaustausch zwischen verschiedenen Funktionseinheiten ermöglicht, bietet dies ferner den Vorteil, dass auch bei Ausfall einer Peripherieeinheit je nach spezifischer Anwendung der Betrieb dennoch aufrecht erhalten werden kann, da die redundanten Mikroprozessoren die gesamte Information über den Zustand der intakten Peripherieeinheiten haben und somit für die Anwendung verfügbar bleiben können.

Eine bevorzugte Ausführungsform sieht vor, dass die eineindeutigen Kommunikationsidentifikationen bereits bei der Herstellung jeweils fest vorgegeben sind. Alternativ sind die eineindeutigen Kommunikationsidentifikationen bei einer zweiten Ausführungsform anwendungsspezifisch variabel vorgebbar, insbesondere programmierbar.

Gemäß einer Weiterbildung ist vorgesehen, dass auch die Kommunikationsidentifikationen alle anderen an einen gemeinsamen Mikroprozessorbus angeschalteten Einheiten in jeder dieser angeschalteten Einheiten hinterlegt sind. Dies kann beispielsweise durch Programmierung erfolgen oder z.B. durch Abfrage- und/oder Anmeldeszenarien, wobei derartige Szenarien dem Fachmann an und für sich bekannt sind.

In einer weiterbildenden Ausführungsform ist ferner bevorzugt vorgesehen, dass wenigstens eine an einen Mikroprozessorbus angeschaltete Peripherieeinheit, zweckmäßig auch jeder Mikroprozessor, besonders zweckmäßig jede an einen Mikroprozessorbus angeschaltete Einheit beim Senden auch die Kommunikationsidentifikation des beabsichtigten Empfängers mit überträgt.

Die als Empfänger vorgesehene Einheit kann daraufhin durch sicherheitsgerichtete Auswertung zunächst die eigene in den übertragenden Daten enthaltenen Kommunikationsidentifikation überprüfen, bevor die weiteren Daten selbst sicherheitsgerichtet ausgewertet werden. Diese Lösung eignet sich somit in der Regel am besten, um z.B. sichere Analog-ICs als Peripherieeinheiten an Mikroprozessoren anzubinden.

In einer anderen weiterbildenden Ausführungsform ist wenigstens eine an einen Mikroprozessorbus angeschaltete Peripherieeinheit ausgebildet, bestimmten weiteren oder allen weiteren an einen gemeinsamen Mikroprozessorbus angeschalteten Einheiten als beabsichtigte empfangende Einheiten Daten zu senden, um diese z.B. mit einem Befehl in einen vorgegebenen Zustand zu versetzen, z.B. in einen sicheren Zustand.

Hierbei ist zweckmäßig ferner wenigstens eine an einen Mikroprozessorbus angeschaltete Peripherieeinheit ausgebildet, beim Senden von Daten auch die Kommunikationsidentifikationen der bestimmten weiteren oder aller weiteren an einen gemeinsamen Mikroprozessorbus angeschalteten Einheiten als beabsichtigte empfangende Einheiten, d.h. als beabsichtigte Empfänger mit zusenden.

Um die Kommunikation auch über Standardschnittstellen in Bezug auf sicherheitsgerichtete Anwendungen zusätzlich zu verbessern, ist ferner vorgesehen, dass alle an einen Mikroprozessorbus angeschaltete Einheiten ausgebildet sind, eine zusätzliche Datenabsicherung durch CRC durchzuführen, um eine Datenfälschung einfacher zu erkennen, Zeitstempel oder Lebenszeichen, wie z.B. laufende Zähler hinzuzufügen, um beispielsweise einen Datenverlust, oder Ausbleiben der Daten zu erkennen und/oder eine zeitliche Überwachung der Kommunikation durchführen.

Weitere Vorteile und Merkmale der Erfindung werden aus der nachfolgenden Beschreibung bevorzugter Ausführungsbeispiele unter Bezugnahme auf die angehängten Zeichnungen näher beschrieben. In den Zeichnungen zeigen:
Fig. 1 eine Prinzipskizze einer Anbindung innerhalb eines E/A-Moduls eines sicheren Anbindungsgerätes von als sichere Peripherieeinheiten ausgebildeten Peripherieeinheiten an redundante, Verarbeitungslogik beinhaltende Logikkanäle, die jeweils in einem separaten Mikroprozessor beherbergt sind, und
Fig. 2 eine Prinzipskizze eines Datenaustauschs zwischen einer solchen Peripherieeinheit und dem Logikkanal eines Mikroprozessors.

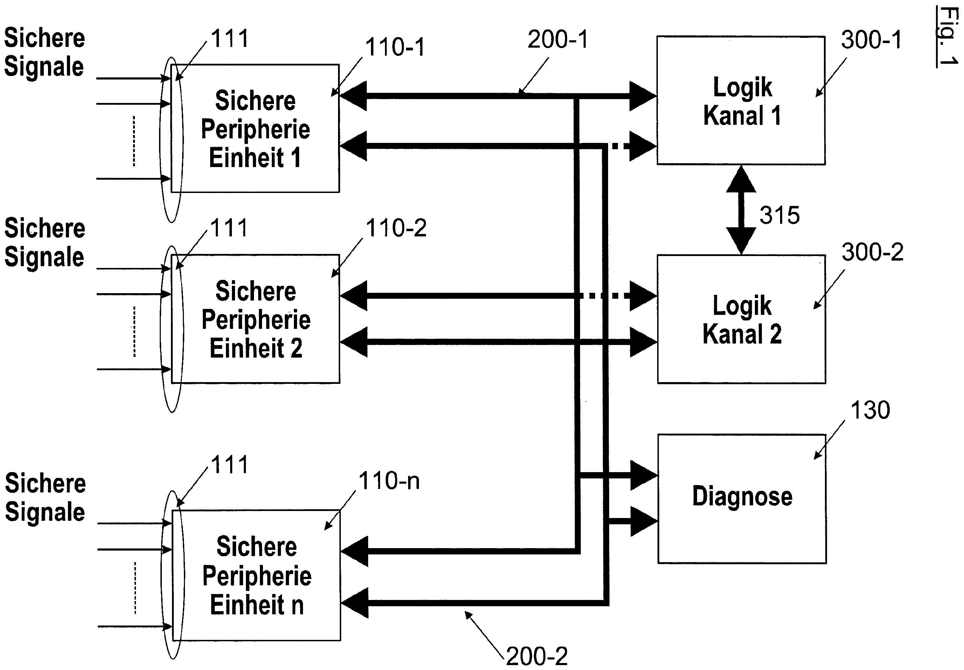

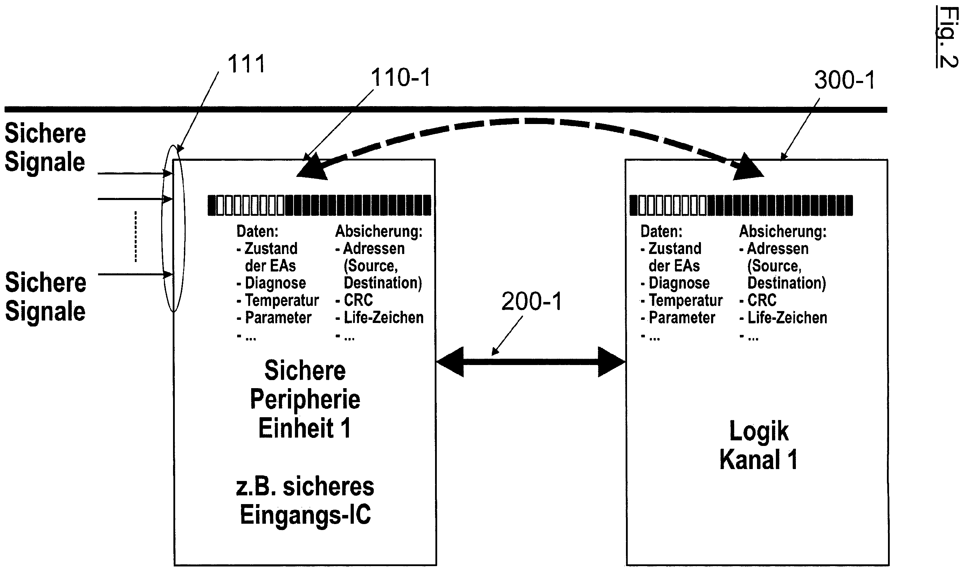

Nachfolgend wird eine Anbindung nach der Erfindung innerhalb eines nicht in den Figuren näher dargestellten E/A-Moduls eines sicheren Anbindungsgerätes von Peripherieeinheiten an redundante Verarbeitungslogik beinhaltende Logikkanäle, die jeweils in einem separaten Mikroprozessor beherbergt sind, detaillierter beschrieben. Das E-/A-Modul dient zum Erfassen von an wenigstens einem Signal-Peripherieanschluss 111 anliegenden Eingangs-Peripheriesignalen, die bei Fig. 1 und 2 als "sichere Signale" angezeigt sind, und/oder zum Ausgeben von Ausgangs-Peripheriesignalen an wenigstens einem Signal-Peripherieanschluss.

Hierzu umfasst das E-/A-Modul ein Mikrocontrollersystem, welches, wie Figur 1 zeigt, eine erste Anzahl n von Peripherieeinheiten besitzt, wobei die erste Anzahl n 1 bis N sein kann. Die darstellten Peripherieeinheiten 110-1,110-2 bis 110-n sind als sichere Peripherieeinheiten ausgebildet und jede dieser Peripherieeinheiten besitzt eine Anzahl von Signal-Peripherieeingängen als Signal-Peripherieanschlüsse 111, so dass das bei Figur 1 insgesamt dargestellte E/A-Modul folglich ein E/A-Modul zum Erfassen von anliegenden Eingangs-Peripheriesignalen zeigt. Die anliegenden Eingangs-Peripheriesignalen sind somit ferner zweckmäßig sichere Signale. Es sei darauf hingewiesen, dass grundsätzlich auch eine Anordnung im Rahmen der Erfindung liegt, bei welcher die Peripherieeinheiten 1 bis n alternativ oder auch ergänzend Signal-Peripherieausgänge als Signal-Peripherieanschlüsse 111 besitzen können, so dass dann das E/A-Modul alternativ oder ergänzend auch zum Ausgehen von Ausgangs-Peripheriesignalen angepasst ist.

Sofern bei der nachfolgenden Beschreibung lediglich von Signal-Peripherieanschluss und Peripheriesignalen die Rede ist, ist davon auszugehen, dass dies für beide Arten von Signal-Peripherieanschlüssen zutrifft.

Nach Fig. 1 besitzt das Mikrocontrollersystem des E-/A-Moduls zusätzlich zur ersten Anzahl der Peripherieeinheiten 110-1, 110-2, 110-n mit jeweils wenigstens einem Signal-Peripherieanschluss 111, eine zweite Anzahl von Mikroprozessoreinheiten 300-1, 300-2 sowie wenigstens eine Diagnoseeinheit 130. Gemäß einer wie bei Fig. 1 dargestellten Ausführungsform beherbergt jede Mikroprozessoreinheit 300-1, 300-2 zumindest einen, Verarbeitungslogik beinhaltenden Logikkanal. Auch wenn bei Fig. 1 zwei Mikroprozessoreinheiten 300-1 und 300-2 gezeigt sind, kann die zweite Anzahl auch 1 oder auch mehr als 2 betragen. Eine wie bei Fig. 1 dargestellte redundante Ausführung von wenigstens zwei Mikroprozessoreinheiten 300-1, 300-2 ist jedoch zweckmäßig.

Jede Peripherieeinheit 110-1, 110-2 und 110-n, jede Mikroprozessoreinheit 300-1, 300-2 und die Diagnoseeinheit 130 besitzen ferner ein in den Figuren nicht näher dargestelltes Mikrocontrollerinterface zum Kommunizieren über einen Mikroprozessorbus sowie zum Realisieren von Steuer- und/oder Kontrollfunktionen, wobei jede Peripherieeinheit 110-1, 110-2 und 110-n an wenigstens eine Mikroprozessoreinheit 300-1, 300-2 über wenigstens einen Mikroprozessorbus 200-1, 200-2 geschaltet ist, an welchen jeweils auch die Diagnoseeinheit 130 angeschaltet ist.

Es sei darauf hingewiesen, dass die Peripherieeinheiten 110-1 bis 110-n und die Diagnoseeinheit 130 somit beispielsweise ausgebildet sein können, wie die Analogsignal-Erfassungsschaltungen bzw. die Diagnoseschaltung, der am selben Tag wie die vorliegende dt. Patentanmeldung von derselben Anmelderin eingereichten dt. Patentanmeldung mit dem Titel "Analogsignal-Eingangsschaltung mit einer Anzahl von Analogsignal-Erfassungskanälen", wobei die Signal-Peripherieanschlüsse 111 der vorliegenden Erfindung dann ferner den dort beschriebenen ersten Anschlusseinrichtungen entsprechen können. Alternativ können anstelle der dargestellten Peripherieeinheiten 110-1 bis 110-n z.B. auch Peripherieeinheiten sowie eine Diagnoseeinheit 130 eingesetzt werden, die ausgebildet sind, wie die Analogsignal-Ausgabeschaltungen bzw. die Diagnoseschaltung, der am selben Tag wie die vorliegende dt. Patentanmeldung von derselben Anmelderin eingereichten dt. Patentannmeldung mit dem Titel "Analogsignal-Ausgangsschaltung mit einer Anzahl von Analogsignal-Ausgabekanälen", wobei auch in diesem Fall die Signal-Peripherieanschlüsse der vorliegenden Erfindung dann ferner den dort beschriebenen ersten Anschlusseinrichtungen entsprechen können. Diese beiden weiteren Patentannmeldungen werden daher diesbezüglich durch Bezugnahme mit zur Offenbarung der vorliegenden Patentanmeldung genommen.

Jede der Peripherieeinheiten 110-1, 110-2 und 110-n sowie jede Mikroprozessoreinheit 300-1 und 300-2 und die Diagnoseeinheit 130 besitzen ferner eine eineindeutige Kommunikationsidentifikation, z.B. eine Sicherheitsadresse, wobei jede der an einen Mikroprozessorbus 200-1, 200-2 angeschalteten Einheiten ausgebildet ist, beim Senden über den Mikroprozessorbus von Daten die jeweilige eigene eineindeutige Kommunikationsidentifikation als sicherheitsrelevantes Datum mit zu senden und beim Empfangen von über den Mikroprozessorbus gesendeten Daten die Kommunikationsidentifikation einer jeweiligen sendenden Einheit als sicherheitsrelevantes Datum zu erkennen und sicherheitsgerichtet auszuwerten.

Folglich können Standardschnittstellen, z.B. in Art von SPI oder USB-Schnittstellen, eingesetzt werden, so dass nur wenige Signale auch für die Verarbeitung von sicherheitsrelevanten Signalen erforderlich sind. Denn eine Fehlerdiagnose ist bereits gegeben, wenn von den Einheiten, insbesondere den Peripherieeinheiten lediglich die eigene Kommunikationsidentifikation gesendet wird, da, wie bei Fig. 2 zu sehen, eine Absicherung der Daten bereits durch die eineindeutige Kommunikationsidentifikation der sendenden Einheit gegeben, welche auf Seiten einer empfangenden Einheit auswertet wird. Bei Figur 2, welche eine Prinzipskizze eines Datenaustauschs zwischen einer solchen Peripherieeinheit 100-1 und dem Logikkanal eines Mikroprozessors 300-1 über den Mikroprozessorbus 200-1 zeigt, ist die Absicherung durch eineindeutige Kommunikationsidentifikationen sendender Einheiten als "Adressen (Source)" zusammengefasst. Die Daten selbst können ferner je nach vorhandenen Signal-Peripherieanschlüssen anliegende Eingangs-Peripheriesignale und/oder auszugebende Ausgangs-Peripheriesignale repräsentierend beinhalten.

Die jeweiligen Kommunikationseinheiten können hierbei untereinander über mindestens einen Mikroprozessorbus angeschlossen sein oder aber über zwei oder mehrere Mikroprozessorbusse.

So können z.B. in einfachster Ausführung, in Abwandlung zur Fig. 1, über den Mikroprozessorbus 200-1 lediglich die Peripherieeinheit 110-1, der Logikkanal 1 der Mikroprozessoreinheit 300-1 und die Diagnoseeinheit 130, über den Mikroprozessorbus 200-2 lediglich die Peripherieeinheit 110-2, der Logikkanal 2 der Mikroprozessoreinheit 300-1 und eine weitere Diagnoseeinheit und über jeweils einen weiteren Mikroprozessorbus lediglich eine weitere Peripherieeinheit, der Logikkanal einer weiteren Mikroprozessoreinheit und eine weitere Diagnoseeinheit 130 angeschlossen sein.

Um jedoch die Anzahl der verschiedenen Funktionseinheiten, welche zum gegenseitigen Datenaustausch und/oder zum lesenden und/oder schreibenden Zugriff miteinander kommunizieren können, zu erhöhen, so dass die interne Sicherheitsstruktur des E/A-Moduls insgesamt gesteigert ist, ist zumindest anstelle unterschiedlicher Diagnoseeinheiten einer gemeinsame Diagnoseeinheit 130 vorgesehen, welche an alle Peripherieeinheiten über den wenigstens einen Mikroprozessorbus angeschlossen ist.

Zweckmäßig ist daher ferner jede der Peripherieeinheiten 110-1, 110-2 und 110-n auch zur Kommunikation untereinander an wenigstens einen gemeinsamen Mikroprozessorbus angeschaltet, wie beispielsweise über den Mikroprozessorbus 200-1 nach Fig. 1. Alternativ, vorzugsweise jedoch wie bei Fig. 1 zu sehen, ergänzend, beherbergt das E/A-Modul ferner wenigstens zwei Mikroprozessoreinheiten 300-1 und 300-2 in redundanter Ausführung, wobei jede der ersten Anzahl von Peripherieeinheiten 110-1, 110-2 und 110-n und die Diagnoseeinheit 130 an jede Mikroprozessoreinheit über wenigstens einen Mikroprozessorbus, wie beispielsweise über den Mikroprozessorbus 200-1 nach Fig. 1, angeschaltet sind. Besonders bevorzugt sind die Peripherieeinheiten 110-1, 110-2 und 110-n und die Diagnoseeinheit 130 derart angeschaltet sind, dass an jede Mikroprozessoreinheit wenigstens zwei Mikroprozessorbusse angeschaltet sind, wie beispielsweise über die Mikroprozessorbusse 200-1 und 200-2 nach Fig. 1, wobei die gestrichelt dargestellten Verbindungen des Mikroprozessorbusses 200-2 mit berücksichtigt sind.

Darüber hinaus sieht die Erfindung bevorzugt vor, dass auch jede der redundant beherbergten Mikroprozessoreinheiten 300-1 und 300-2 ferner über eine zusätzliche Querkommunikationsverbindung 315 miteinander verschaltet sind, so dass auch parallel und/oder ergänzend zu der Kommunikation über den Mikroprozessorbus 200-1 und/oder 200-2 ein Kommunikationsaustausch zwischen den redundanten Mikroprozessoreinheiten 300-1 und 300-2 ermöglicht ist.

Die Erfindung schlägt somit insgesamt eine Ausgestaltung der Peripherieeinheiten 110-, 110-2 und 110-n vor, bei der diese und zweckmäßig jede weitere Kommunikationseinheit des Mikrocontrollersystems des E-/A-Moduls, also auch die Mikroprozessoreinheiten 300-1 und 300-2 sowie die Diagnoseeinheit 130 eineindeutige Kommunikationsidentifikationen, die als Sicherheitsadresse dienen, besitzen, über die sie angesprochen werden kann. Diese Kommunikationsidentifikationen können fest vorgegeben sein. Die Kommunikationsidentifikation kann z.B. eine eineindeutige Identifikation innerhalb eines ICs sein Für die Peripherieeinheiten eignet sich dies insbesondere, wenn sichere Analog-ICs, wie z.B. sichere Eingangs- oder Ausgangs-ICs, als Peripherieeinheiten eingesetzt werden. Alternativ können Kommunikationsidentifikationen variabel vorgebbar sein, z.B. in der Chip-Fertigung oder in der Fertigung des Anbindungsgerätes einprogrammiert werden.

Bei der Kommunikation über den wenigstens einen Mikroprozessorbus kann es sich folglich um lesende und schreibende Zugriffe auf die sicheren Peripherieeinheiten handeln und als Kommunikationsphysik können Standard Schnittstellen, wie z.B. SPI oder ein paralleles Mikrokontroller Interface, verwendet werden. Durch die Verwendung der eineindeutigen Kommunikationsidentifikationen als Sicherheitsadressen kann somit eine falsche Adressierung erkannt werden.

Um die Kommunikation entsprechend den Sicherheitsstandards abzusichern überträgt ein Sender beim Übertragen von Daten an einen beabsichtigten Empfänger und/oder mehrere beabsichtigten Empfänger zumindest die eigene Kommunikationsidentifikation als sicherheitsrelevantes Datum.

Zur weiteren Erhöhung des Sicherheitsstandards überträgt ein Sender beim Übertragen von Daten an einen Empfänger oder mehrere Empfänger auch die Kommunikationsidentifikation des beabsichtigten Empfängers oder der beabsichtigten Empfänger als sicherheitsrelevantes Datum. Insbesondere in diesen Fällen sind zweckmäßig die eineindeutigen Kommunikationsidentifikationen aller dieser an einen gemeinsamen Mikroprozessorbus angeschalteten Einheiten in jeder dieser angeschalteten Einheiten hinterlegt oder hinterlegbar. Dies kann z.B. auch durch Abfrage- und/oder Anmeldeszenarien der einzelnen Einheiten erfolgen.

Ein jeweiliger Empfänger wertet die mitübertragene Kommunikationsidentifikation oder auch die mitübertragenen Kommunikationsidentifikationen sicherheitsgerichtet aus und prüft diese vorzugsweise auf die Richtigkeit, bevor die weiteren übertragenen Daten ausgewertet werden.

Je nach spezieller Ausgestaltung kann die Prüfung auf Richtigkeit dabei z.B. eine Prüfung auf Richtigkeit der Kommunikationsidentifikation einer erwarteten sendenden Einheit sein und/oder eine Prüfung auf Richtigkeit der Kommunikationsidentifikation eines jeweiligen Empfängers beinhalten.

Werden Daten an mehrere oder insbesondere auch an alle weiteren an einen gemeinsamen Mikroprozessorbus angeschalteten Einheiten als beabsichtigte empfangende Einheiten übertragen, können diese hierdurch z.B. mit einem Befehl in einen vorgegebenen Zustand versetzt werden, z.B. in einen sicheren Zustand. So kann demnach im Rahmen der Erfindung wenigstens eine der an einen Mikroprozessorbus angeschalteten Einheiten, insbesondere auch Peripherieeinheit, ausgebildet sein, dass z.B. eine vordefinierte, einzelne Nachricht für alle weiteren oder bestimmte weitere Kommunikationseinheiten gesendet werden kann, die eine vordefinierte Reaktion dieser Kommunikationseinheiten bewirkt. So kann es z.B. bei einem gewünschten Umschalten im Fehlerfall zweckmäßig sein, nur bestimmte Kommunikationseinheiten anzusprechen.

Im Rahmen der Erfindung kann ferner alternativ oder ergänzend ein Sender in vorgegebenen Zeitabständen sicheren Daten übertragen, wobei die Kommunikationsidentifikationsnummer des beabsichtigten Empfängers oder der beabsichtigten Empfänger nicht zwingend mit zu übertragen sind. Dies ist am besten geeignet, um z.B. als sicheren Analog-ICs ausgebildete Peripherieeinheiten an die sichere Verarbeitungslogik des Logikkanals eines bestimmten Mikroprozessors oder mehrerer bestimmter Mikroprozessoren anzubinden. Folglich können z.B. wenigstens eine oder auch alle Peripherieeinheiten ausgebildet sein, unaufgefordert aktuelle Daten in vorgegebnen Zeitabständen zu senden.

Ferner hat dies den Vorteil, dass z.B. die Peripherieeinheit neue Daten, z.B. an einem sicheren Eingangs-Analog-IC anliegende, Messwerte der Feldgeräte-Peripherie repräsentierende Eingangs-Peripheriesignale, unaufgefordert sendet, die bei Bedarf in der Verarbeitungslogik des Logikkanals eines bestimmten Mikroprozessors oder mehrerer bestimmter Mikroprozessoren ausgewertet werden können. Hierbei kann die Prüfung auf Richtigkeit z.B. auch eine zeitliche Überwachung der Kommunikation beinhalten.

Auch in Bezug auf die Absicherung und Auswertung der weiteren übertragenen Daten sind ferner je nach zu erfüllendem Sicherheitsstandard die an einen Mikroprozessorbus angeschalteten Einheiten zweckmäßig ausgebildet, eine zusätzliche Datenabsicherung durch CRC (Cyclic Redundancy Check) durchzuführen, Zeitstempel oder Lebenszeichen, wie z.B. laufende Zähler hinzuzufügen, und/oder eine zeitliche Überwachung der Kommunikation durchführen. Bei Figur 2 sind bevorzugte Absicherungen kurz zusammengefasst und beispielsweise Absicherungen durch eineindeutige Kommunikationsidentifikationen sendender und empfangender Einheiten als "Adressen (Source, Destination)" zusammengefasst. Die Daten selbst können ferner je nach vorhandenen Signal-Peripherieanschlüssen anliegende Eingangs-Peripheriesignale und/oder auszugebende Ausgangs-Peripheriesignale repräsentierend beinhalten. Die zwischen den Einheiten auszutauschenden Daten können somit unter Bezugnahme auch auf Fig. 2 Nutzdaten, Daten betreffend die Zustände der Eingänge und/oder Ausgänge, Parametrierungsdaten, Diagnosedaten, Temperatur- und weitere Daten je nach spezifischer Applikation und/oder Befehle, z.B. Abschaltbefehle beinhalten.

Die Verwendung der Standardschnittstellen auch zwischen der Kommunikation zwischen Mikroprozessor und Peripherieeinheiten innerhalb eines E/A-Moduls nach der Erfindung wird somit durch die vorbeschriebenen Absicherungsmaßnahmen und also vorhandene Fehlerdiagnose ermöglicht, d.h. insbesondere dadurch, dass eine sendende Einheit eine eigene eineindeutige Kommunikationsidentifikation mit überträgt. Vorzugsweise ferner dadurch, dass eine sendende Einheit zusätzlich eine eineindeutige Kommunikationsidentifikationsnummer wenigstens einen beabsichtigten Empfängers mit überträgt. Besonders bevorzugt zusätzlich dadurch, dass eine zusätzliche Datenabsicherung durch CRC erfolgt, um die Datenfälschung zu erkennen, dass Zeitstempel oder Life-Zeichen, z.B. laufender Zähler mit übertragen werden, dass Zähler bei der Datenübertragung mit übertragen werden, um z.B. einen Datenverlust, ein Vertauschen oder ein Ausbleiben der Daten zu erkennen und/oder, dass eine zeitliche Überwachung der Kommunikation vorgenommen wird, wobei diese zusätzlichen Maßnahmen dem Fachmann in Bezug auf interne Sicherheitsstrukturen an und für sich bekannt sind.

Die Erfindung ermöglicht somit in besonders bevorzugter Ausführung eine sichere Kommunikation zwischen verschiedensten Einheiten eines E/A-Moduls mit Mikrocontrollersystem, wie z.B. zwischen einer Peripherieeinheit und dem, eine Verarbeitungslogik beinhaltenden Logikkanal wenigstens eines Mikroprozessors, zwischen verschiedenen Logikkanälen, z.B. für einen Quervergleich der Zwischen- und Berechnungsergebnisse in den einzelnen Logikkanälen, zwischen wenigstens zwei Peripherieeinheiten, zwischen den Peripherieeinheiten und der Diagnoseeinheit, zwischen der Diagnoseeinheit und wenigstens einem Logikkanal, wobei auch ein gleichzeitiges Ansprechen aller oder vieler Kommunikationseinheiten möglich ist.

Im Gegensatz zu einer konventionalen Anbindung von sicherer Peripherie an die Verarbeitungslogik bietet die vorgeschlagene Lösung nach der Erfindung somit insbesondere folgende Möglichkeiten:
- Es können die Standard Schnittstellen verwendet werden (z.B. SPI, USB usw.)
- Nur wenige Signale sind erforderlich, was die Verwendung von Low Cost Mikrokontroller ermöglicht.
- Es ist sehr kostengünstig, da die Anzahl der erforderlichen Signale minimal ist.
- Es ist keine weitere Absicherung der Kommunikationsstrecken erforderlich.
- Unterschiedliche Logikkanäle können den Status der sicheren Peripherieeinheiten insgesamt abfragen, einschließlich des Status einer Peripherieeinheit, welche gegebenenfalls einem anderen Logikkanal zugeordnet ist.
- Alle Logikkanäle können die sichere Peripherie abschalten bzw. in einen vorbestimmten Zustand versetzen.
- Ein vollständiger Quervergleich zwischen den Logikkanälen ist möglich, da entsprechende Information über den Zustand der Peripherie kostengünstig den Logikkanälen zur Verfügung gestellt werden kann.
- Die Mikroprozessorbusanbindung kann seriell oder parallel realisiert sein.
- Die Mikroprozessorbusanbindung kann auch redundant ausgeführt werden, um eine bessere Verfügbarkeit des Gerätes insgesamt zu erreichen.
- Alle Logikkanäle können auf alle Peripherieeinheiten Zugriff haben oder nur auf einen Teil der Peripherieeinheiten.
- Die Datenübertragung kann von der Verarbeitungslogik angestoßen werden oder zyklisch von den Peripherieeinheiten unaufgefordert erfolgen.
- Die Datenübertragung kann durch einen Watchdog gesichert werden.
- Die Peripherieeinheiten können beim Ausbleiben der Kommunikation selbstständig in den vordefinierten sicheren Zustand wechseln.
- Die Querkommunikation zwischen den Peripherieeinheiten ist möglich.
- Die Diagnoseeinheit kann die Peripherieeinheiten ansprechen und somit diagnostizieren.
- Die Diagnoseeinheit kann den Datentransfer auf den Mikroprozessorbussen überwachen und entsprechende Reaktion auf festgestellte Fehler ausüben.
- Die Diagnoseeinheit kann einen Zugriff auf die Peripherieeinheiten bekommen, mit dem die Peripherieeinheiten von der Diagnoseeinheit in einen definierten sicheren Zustand versetzt werden können, z.B. im Fehlerfall.
- Die Peripherieeinheiten haben die Möglichkeit weitere Peripherieeinheiten durch eine direkte Adressierung in den vordefinierten Zustand zu versetzen.
- Alle Peripherieeinheiten können gleichzeitig mit einem Befehl auf dem Mikroprozessorbus in einen vordefinierten Zustand versetzt werden.
- Bei Ausfall einer Peripherieeinheit kann der Betrieb aufrecht erhalten werden, da alle Logikkanäle die gesamte Information über den Zustand der intakten Peripherieeinheiten haben und somit für die Anwendung verfügbar bleiben.
- Die Anbindung der Peripherie an die Verarbeitungslogik ist sehr günstig, da diese nur noch wenige Bussignale erforderlich macht (z.B. seriell).
- Die gleichen Kommunikationsschnittstellen können für den Datenaustausch zwischen den Logikkanälen verwendet werden.
- Minimale Anzahl der Pins beim Mikrokontroller für die Verarbeitungslogik erforderlich, was die Verwendung von Low Cost Mikrokontroller vereinfacht.

### Bezugszeichen:

- 111: Signal-Peripherieanschlüsse,
- 110-1, 110-2, 110-n: Peripherieeinheiten,
- 130: Diagnoseeinheit,
- 200-1, 200-2: Mikroprozessorbusse,
- 300-1, 300-2: Mikroprozessoreinheiten,
- 315: Querkommunikationsverbindung

## Patentansprüche

1. Gerät, welches an einem sicherheitsrelevanten oder sicherheitskritischen Prozess beteiligt ist zur Überwachung und/oder Steuerung des sicherheitsrelevanten oder sicherheitskritischen Prozesses, aufweisend ein E-/A-Modul zum Erfassen von an wenigstens einem Signal-Peripherieanschluss (111) anliegenden Eingangs-Peripheriesignalen und/oder zum Ausgeben von Ausgangs-Peripheriesignalen an wenigstens einem Signal-Peripherieanschluss (111) mittels wenigstens einer beherbergten Peripherieeinheit (110-1, 110-2, 110-n),
wobei das E-/A-Modul ein Mikrocontrollersystem mit einer ersten Anzahl von Peripherieeinheiten (110-1, 110-2, 110-n) mit jeweils wenigstens einem Signal-Peripherieanschluss (111), an welchem anliegende Eingangs-Peripheriesignale erfasst und/oder Ausgangs-Peripheriesignale ausgegeben werden, einer zweiten Anzahl von Mikroprozessoreinheiten (300-1, 300-2) sowie wenigstens eine Diagnoseeinheit (130) beherbergt,
wobei jede der ersten Anzahl von Peripherieeinheit (110-1, 110-2, 110-n) sowie jede der zweiten Anzahl von Mikroprozessoreinheiten und die Diagnoseeinheit (130) jeweils eine eineindeutige Kommunikationsidentifikation besitzen, und
jede der ersten Anzahl von Peripherieeinheiten (110-1, 110-2, 110-n), jede der zweiten Anzahl von Mikroprozessoreinheiten (300-1, 300-2) und die Diagnoseeinheit (130) ein Mikrocontrollerinterface zum Kommunizieren über einen Mikroprozessorbus (200-1, 200-2) sowie zum Realisieren von Steuer- und/oder Kontrollfunktionen besitzen,
wobei jede der ersten Anzahl von Peripherieeinheiten (110-1, 110-2, 110-n) über wenigstens einen Mikroprozessorbus (200-1, 200-2) an wenigstens eine Mikroprozessoreinheit (300-1, 300-2) geschaltet ist, an welchen Mikroprozessorbus (200-1, 200-2) jeweils auch die Diagnoseeinheit (130) angeschaltet ist,
wobei die Diagnoseeinheit (130) den Datentransfer auf den Mikroprozessorbussen (200-1, 200-2) überwacht und einen Zugriff auf die Peripherieeinheiten (110-1, 110-2, 110-n) bekommt, mit dem die Peripherieeinheiten (110-1, 110-2, 110-n) von der Diagnoseeinheit (130) in einen definierten sicheren Zustand im Fehlerfall versetzt werden, und
jede dieser an einen Mikroprozessorbus (200-1, 200-2) angeschalteten Einheiten ausgebildet ist, beim Senden über den Mikroprozessorbus (200-1, 200-2) von Daten, welche an dem wenigstens einem Signal-Peripheranschluss anliegende Peripheriesignale und/oder an den wenigstens einen Signal-Peripherieanschluss (111) auszugebende Ausgangs-Peripheriesignale repräsentierend beinhalten können, die jeweilige eigene eineindeutige Kommunikationsidentifikation als sicherheitsrelevantes Datum mit zu senden und beim Empfangen von über den Mikroprozessorbus (200-1, 200-2) gesendeten Daten die Kommunikationsidentifikation einer jeweiligen sendenden Einheit als sicherheitsrelevantes Datum zu erkennen und sicherheitsgerichtet auszuwerten.

2. E-/A-Modul innerhalb eines Geräts nach Anspruch 1, wobei jede der ersten Anzahl von Peripherieeinheiten (110-1, 110-2, 110-n) auch zur Kommunikation untereinander an wenigstens einen gemeinsamen Mikroprozessorbus (200-1, 200-2) angeschaltet ist.

3. E-/A-Modul innerhalb eines Geräts nach Anspruch 1 oder 2, wobei wenigstens zwei Mikroprozessoreinheiten in redundanter Ausführung beherbergt sind, wobei jede der ersten Anzahl von Peripherieeinheiten (110-1, 110-2, 110-n) und die Diagnoseeinheit (130) an jede Mikroprozessoreinheit (300-1, 300-2) über wenigstens einen Mikroprozessorbus (200-1, 200-2) angeschaltet sind.

4. E-/A-Modul innerhalb eines Geräts nach Anspruch 3, wobei jede der ersten Anzahl von Peripherieeinheiten (110-1, 110-2, 110-n) und die Diagnoseeinheit (130) derart angeschaltet sind, dass an jede Mikroprozessoreinheit (300-1, 300-2) wenigstens zwei Mikroprozessorbusse (200-1, 200-2) angeschaltet sind.

5. E-/A-Modul innerhalb eines Geräts nach Anspruch 3 oder 4, wobei jede der redundant beherbergten Mikroprozessoreinheiten ferner über eine zusätzliche Querkommunikationsverbindung (315) miteinander verschaltet sind, so dass auch parallel und/oder ergänzend zu der Kommunikation über den Mikroprozessorbus (200-1, 200-2) ein Kommunikationsaustausch zwischen den redundanten Mikroprozessoreinheiten ermöglicht ist.

6. E-/A-Modul innerhalb eines Geräts nach einem der vorstehenden Ansprüche, wobei die eineindeutige Kommunikationsidentifikation jeweils fest vorgegeben ist oder variabel vorgebbar, insbesondere programmierbar ist.

7. E-/A-Modul innerhalb eines Geräts nach einem der vorstehenden Ansprüche, wobei die eineindeutigen Kommunikationsidentifikationen aller dieser an einen gemeinsamen Mikroprozessorbus (200-1, 200-2 angeschalteten Einheiten in jeder dieser angeschalteten Einheiten hinterlegt oder hinterlegbar sind.

8. E-/A-Modul innerhalb eines Geräts nach Anspruch 7, wobei wenigstens eine an einen Mikroprozessorbus (200-1, 200-2) angeschaltete Peripherieeinheit (110-1, 110-2, 110-n) beim Senden auch die Kommunikationsidentifikation der beabsichtigten empfangenden Einheit mit sendet.

9. E-/A-Modul innerhalb eines Geräts nach Anspruch 7 oder 8, wobei wenigstens eine an einen Mikroprozessorbus (200-1, 200-2) angeschaltete Peripherieeinheit (110-1, 110-2, 110-n) ausgebildet ist, bestimmten weiteren oder allen weiteren an einen gemeinsamen Mikroprozessorbus (200-1, 200-2) angeschalteten Einheiten als beabsichtigte empfangende Einheiten Daten zu senden.

10. E-/A-Modul innerhalb eines Geräts nach Anspruch 9, wobei wenigstens eine an einen Mikroprozessorbus (200-1, 200-2) angeschaltete Peripherieeinheit (110-1, 110-2, 110-n) ausgebildet ist, beim Senden von Daten auch die Kommunikationsidentifikationen von bestimmten weiteren oder aller weiteren an einen gemeinsamen Mikroprozessorbus (200-1, 200-2) angeschalteten Einheiten als beabsichtigte empfangenden Einheiten mit zusenden.

11. E-/A-Modul innerhalb eines Geräts nach einem der vorstehenden Ansprüche, wobei alle dieser an einen Mikroprozessorbus (200-1, 200-2) angeschalteten Einheiten ausgebildet sind, eine zusätzliche Datenabsicherung durch CRC durchzuführen, Zeitstempel oder Lebenszeichen, wie z.B. laufende Zähler hinzuzufügen, und/oder eine zeitliche Überwachung der Kommunikation durchführen.

12. E-/A-Modul innerhalb eines Geräts nach einem der vorstehenden Ansprüche, wobei wenigstens eine der Peripherieeinheiten (110-1, 110-2, 110-n) ausgebildet ist, unaufgefordert aktuelle Daten in vorgegebenen Zeitabständen zu senden.

13. E-/A-Modul innerhalb eines Geräts nach einem der vorstehenden Ansprüche, wobei wenigstens eine der an einen Mikroprozessorbus (200-1, 200-2) angeschalteten Einheiten, insbesondere auch Peripherieeinheit (110-1, 110-2, 110-n), ausgebildet ist, eine vordefinierte, einzelne Nachricht für alle weiteren oder bestimmte weitere Kommunikationseinheiten zu senden, die eine vordefinierte Reaktion dieser Kommunikationseinheiten bewirkt.

## Claims

1. A device involved in a safety-relevant or safety-critical process for monitoring and/or controlling said safety-relevant or safety-critical process, comprising an I/O module for gathering input peripheral signals applied on at least one peripheral signal port (111) and/or for outputting output peripheral signals on at least one peripheral signal port (111) by at least one accommodated peripheral unit (110-1, 110-2, 110-n);
wherein the I/O module accommodates a microcontroller system having a first plurality of peripheral units (110-1, 110-2, 110-n) each having at least one peripheral signal port (111) at which applied input peripheral signals are gathered and/or output peripheral signals are output, a second plurality of microprocessor units (300-1, 300-2), and at least one diagnostic unit (130);
wherein each of the first plurality of peripheral units (110-1, 110-2, 110-n) and each of the second plurality of microprocessor units, and the diagnostic unit (130) have a respective biunique communication identifier; and
each of the first plurality of peripheral units (110-1, 110-2, 110-n), each of the second plurality of microprocessor units (300-1, 300-2), and the diagnostic unit (130) have a microcontroller interface for communicating via a microprocessor bus (200-1, 200-2) and for performing driving and/or controlling functions;
wherein each of the first plurality of peripheral units (110-1, 110-2, 110-n) is connected to at least one microprocessor unit (300-1, 300-2) via at least one microprocessor bus (200-1, 200-2), which microprocessor bus (200-1, 200-2) also has the respective diagnostic unit (130) connected thereto;
wherein the diagnostic unit (130) monitors the data transfer on the microprocessor busses (200-1, 200-2) and gains access to the peripheral units (110-1, 110-2, 110-n), via which the peripheral units (110-1, 110-2, 110-n) are put into a defined safe state by the diagnostic unit (130) in the event of an error; and
each of these units connected to a microprocessor bus (200-1, 200-2) is adapted, when transmitting data via the microprocessor bus (200-1, 200-2), which data may represent peripheral signals applied to the at least one peripheral signal port and/or output peripheral signals to be output to the at least one peripheral signal port (111), to include in the transmission its own respective biunique communication identifier as a safety-relevant data item, and when receiving data that have been transmitted via the microprocessor bus (200-1, 200-2) to identify the communication identifier of a respective transmitting unit as a safety-relevant data item and to evaluate it in a safety-related manner.

2. I/O module in a device according to claim 1, wherein each of said first plurality of peripheral units (110-1, 110-2, 110-n) is connected to at least one shared microprocessor bus (200-1, 200-2), for communication with each other.

3. I/O module in a device according to claim 1 or 2,
wherein at least two microprocessor units are accommodated in a redundant form, wherein each of the first plurality of peripheral units (110-1, 110-2, 110-n) and the diagnostic unit (130) are connected to each microprocessor unit (300-1, 300-2) via at least one microprocessor bus (200-1, 200-2).

4. I/O module in a device according to claim 3, wherein each of the first plurality of peripheral units (110-1, 110-2, 110-n) and the diagnostic unit (130) are connected in such a way that each microprocessor unit (300-1, 300-2) has at least two microprocessor buses (200-1, 200-2) connected thereto.

5. I/O module in a device according to claim 3 or 4, wherein each of the redundantly accommodated microprocessor units are further interconnected via an additional cross-communication connection (315), so that communication exchange between the redundant microprocessor units is also possible in parallel to and/or in addition to the communication via the microprocessor bus (200-1, 200-2).

6. I/O module in a device according to any one of the preceding claims, wherein the biunique communication identifier is fixedly specified in each case, or is variably specifiable, in particular programmable.

7. I/O module in a device according to any one of the preceding claims, wherein the biunique communication identifiers of all of said units connected to a shared microprocessor bus (200-1, 200-2) are stored or can be stored in each of said connected units.

8. I/O module in a device according to claim 7, wherein at least one peripheral unit (110-1, 110-2, 110-n) connected to a microprocessor bus (200-1, 200-2), when transmitting, includes in the transmission the communication identifier of the intended receiving unit.

9. I/O module in a device according to claim 7 or 8, wherein at least one peripheral unit (110-1, 110-2, 110-n) connected to a microprocessor bus (200-1, 200-2) is adapted to transmit data to specific further ones or to all further units connected to a shared microprocessor bus (200-1, 200-2) as intended receiving units.

10. I/O module in a device according to claim 9, wherein at least one peripheral unit (110-1, 110-2, 110-n) connected to a microprocessor bus (200-1, 200-2) is adapted, when transmitting data, to include in the transmission the communication identifiers of specific further ones or of all further units connected to a shared microprocessor bus (2001, 200-2) as the intended receiving units.

11. I/O module in a device according to any one of the preceding claims, wherein all of said units connected to a microprocessor bus (200-1, 200-2) are adapted to perform additional data protection by CRC, to add timestamps or vital signs, such as, e.g., running counters, and/or to perform a time-based monitoring of the communication.

12. I/O module in a device according to any one of the preceding claims, wherein at least one of the peripheral units (110-1, 110-2, 110-n) is adapted to transmit, without being requested, current data at predetermined time intervals.

13. I/O module in a device according to any one of the preceding claims, wherein at least one of the units connected to a microprocessor bus (200-1, 200-2), in particular also peripheral unit (110-1, 110-2, 110-n), is adapted to transmit a predefined individual message for all further or for specific further communication units, which message causes a predefined response of these communication units.

## Revendications

1. Appareil, lequel est impliqué dans un processus essentiel à la sécurité ou critique pour la sécurité, pour la surveillance et/ou la commande du processus essentiel à la sécurité ou critique pour la sécurité, comprenant un module d'entrée/de sortie permettant de détecter des signaux périphériques d'entrée appliqués sur au moins une connexion périphérique de signal (111) et/ou de délivrer des signaux périphériques de sortie à au moins une connexion périphérique de signal (111) au moyen d'au moins une unité périphérique (110-1, 110-2, 110-n) logée,
dans lequel le module d'entrée/de sortie loge un système de microcontrôleur pourvu d'un premier nombre d'unités périphériques (110-1, 110-2, 110-n) pourvues chacune d'au moins une connexion périphérique de signal (111), sur laquelle des signaux périphériques d'entrée appliqués sont détectés et/ou des signaux périphériques de sortie sont délivrés, d'un deuxième nombre d'unités de micro-processeurs (300-1, 300-2) ainsi que d'au moins une unité de diagnostic (130),
dans lequel chacune du premier nombre d'unités périphériques (110-1, 110-2, 110-n) ainsi que chacune du deuxième nombre d'unités de micro-processeurs et l'unité de diagnostic (130) possèdent respectivement une identification de communication univoque, et
chacune du premier nombre d'unités périphériques (110-1, 110-2, 110-n), chacune du deuxième nombre d'unités de micro-processeurs (300-1, 300-2) et l'unité de diagnostic (130) possèdent une interface de microcontrôleur aux fins de communication par l'intermédiaire d'un bus de microprocesseur (200-1, 200-2) ainsi qu'aux fins de réalisation de fonctions de commande et/ou de contrôle,
dans lequel chacune du premier nombre d'unités périphériques (110-1, 110-2, 110-n) est branchée par l'intermédiaire d'au moins un bus de microprocesseur (200-1, 200-2) à au moins une unité de micro-processeurs (300-1, 300-2), bus de microprocesseur (200-1, 200-2) auquel est branchée respectivement également l'unité de diagnostic (130),
dans lequel l'unité de diagnostic (130) surveille le transfert de données sur les bus de microprocesseur (200-1, 200-2) et reçoit un accès aux unités périphériques (110-1, 110-2, 110-n), au moyen duquel les unités périphériques (110-1, 110-2, 110-n) sont amenées par l'unité de diagnostic (130) dans un état sûr défini en cas de défaillance, et
chacune de ces unités branchées à un bus de microprocesseur (200-1, 200-2) est conçue, lors de l'envoi de données par l'intermédiaire du bus de microprocesseur (200-1, 200-2), lesquelles peuvent comporter de manière représentative des signaux périphériques d'entrée appliqués sur l'au moins une connexion périphérique de signal et/ou des signaux périphériques de sortie destinés à être délivrés à l'au moins une connexion périphérique de signal (111), pour envoyer l'identification de communication univoque propre respective comme donnée essentielle à la sécurité et, lors de la réception de données émises par l'intermédiaire du bus de microprocesseur (200-1, 200-2), pour reconnaître l'identification de communication d'une unité d'émission respective comme donnée essentielle à la sécurité et pour l'évaluer comme axée sur la sécurité.

2. Module d'entrée/de sortie à l'intérieur d'un appareil selon la revendication 1, dans lequel chacune du premier nombre d'unités périphériques (110-1, 110-2, 110-n) est branchée à au moins un bus de microprocesseur (200-1, 200-2) commun également aux fins de communication les unes avec les autres.

3. Module d'entrée/de sortie à l'intérieur d'un appareil selon la revendication 1 ou 2, dans lequel au moins deux unités de micro-processeurs sont logées selon un mode de réalisation redondant, dans lequel chacune du premier nombre d'unités périphériques (110-1, 110-2, 110-n) et l'unité de diagnostic (130) sont branchées à chaque unité de micro-processeurs (300-1, 300-2) par l'intermédiaire d'au moins un bus de microprocesseur (200-1, 200-2).

4. Module d'entrée/de sortie à l'intérieur d'un appareil selon la revendication 3, dans lequel chacune du premier nombre d'unités périphériques (110-1, 110-2, 110-n) et l'unité de diagnostic (130) sont branchées de telle manière qu'au moins deux bus de microprocesseur (200-1, 200-2) sont branchés à chaque unité de micro-processeurs (300-1, 300-2).

5. Module d'entrée/de sortie à l'intérieur d'un appareil selon la revendication 3 ou 4, dans lequel chacune des unités de micro-processeurs logées de manière redondante sont connectées en outre les unes aux autres par l'intermédiaire d'une liaison de communication croisée (315) supplémentaire, de sorte qu'un échange de communications entre les unités de micro-processeurs redondantes est permis par l'intermédiaire du bus de microprocesseur (200-1, 200-2) également en parallèle et/ou en complément de la communication.

6. Module d'entrée/de sortie à l'intérieur d'un appareil selon l'une quelconque des revendications précédentes, dans lequel l'identification de communication univoque est respectivement prédéfinie fixement ou peut être prédéfinie de manière variable, en particulier peut être programmée.

7. Module d'entrée/de sortie à l'intérieur d'un appareil selon l'une quelconque des revendications précédentes, dans lequel les identifications de communication univoques de toutes ces unités branchées à un bus de microprocesseur (200-1, 200-2) commun sont mises en mémoire ou peuvent être mises en mémoire dans chacune de ces unités branchées.

8. Module d'entrée/de sortie à l'intérieur d'un appareil selon la revendication 7, dans lequel au moins une unité périphérique (110-1, 110-2, 110-n) branchée à un bus de microprocesseur (200-1, 200-2) envoie également, lors de l'envoi, l'identification de communication de l'unité de réception envisagée.

9. Module d'entrée/de sortie à l'intérieur d'un appareil selon la revendication 7 ou 8, dans lequel au moins une unité périphérique (110-1, 110-2, 110-n) branchée à un bus de microprocesseur (200-1, 200-2) est conçue pour envoyer des données à certaines autres ou à toutes les autres unités branchées à un bus de microprocesseur (200-1, 200-2) commun en tant qu'unités de réception envisagées.

10. Module d'entrée/de sortie à l'intérieur d'un appareil selon la revendication 9, dans lequel au moins une unité périphérique (110-1, 110-2, 110-n) branchée à un bus de microprocesseur (200-1, 200-2) est conçue pour envoyer également, lors de l'envoi de données, les identifications de communication de certaines autres ou de toutes les autres unités branchées à un bus de microprocesseur (200-1, 200-2) commun comme unités de réception envisagées.

11. Module d'entrée/de sortie à l'intérieur d'un appareil selon l'une quelconque des revendications précédentes, dans lequel toutes ces unités branchées à un bus de microprocesseur (200-1, 200-2) sont conçues pour réaliser une sécurisation supplémentaire des données par contrôle de redondance cyclique, pour ajouter des estampilles temporelles ou des signes de vie, tels que par exemple des compteurs en marche, et/ou pour réaliser une surveillance temporelle de la communication.

12. Module d'entrée/de sortie à l'intérieur d'un appareil selon l'une quelconque des revendications précédentes, dans lequel au moins une des unités périphériques (110-1, 110-2, 110-n) est conçue pour envoyer spontanément des données actuelles par intervalles de temps prédéfinis.

13. Module d'entrée/de sortie à l'intérieur d'un appareil selon l'une quelconque des revendications précédentes, dans lequel au moins une des unités branchées à un bus de microprocesseur (200-1, 200-2), en particulier également l'unité périphérique (110-1, 110-2, 110-n), est conçue pour envoyer un message individuel prédéfini à toutes les autres ou à certaines autres unités de communication, qui entraîne une réaction prédéfinie de ces unités de communication.
